# EUROPÄISCHE PATENTSCHRIFT

(11) **EP 0 923 682 B1**
(45) Veröffentlichungstag und Bekanntmachung des Hinweises auf die Patenterteilung: **29.03.2000**
(21) Anmeldenummer: 97942777.0
(22) Anmeldetag: 03.09.1997
(51) Int. Cl.: F16F 9/04

(54) **SCHLITZSCHUTZ FÜR EINEN SCHLAUCHFÖRMIGEN KÖRPER**
SLOTTED PROTECTION FOR A HOSE-LIKE BODY
PROTECTION A FENTE POUR CORPS EN FORME DE TUYAU

(30) Priorität: 09.09.1996 DE 19636377
(43) Veröffentlichungstag der Anmeldung: 23.06.1999
(73) Patentinhaber: PHOENIX AKTIENGESELLSCHAFT, 21079 Hamburg (DE)
(72) Erfinder: HELLMIG, Winfried, D-21614 Buxtehude (DE)
(86) Internationale Anmeldenummer: DE9701927
(87) Internationale Veröffentlichungsnummer: WO9811361

(56) Entgegenhaltungen:
- EP-A- 0 476 451
- DE-A- 3 643 073
- DE-A- 3 937 819
- DE-A- 4 423 602
- DE-A- 19 545 079
- FR-A- 2 328 892
- GB-A- 2 015 691
- US-A- 3 603 350
- US-A- 3 897 941
- PATENT ABSTRACTS OF JAPAN vol. 007, no. 211 (M-243), 17.September 1983 & JP 58 106238 A (YOKOHAMA GOMU KK), 24.Juni 1983,
- PATENT ABSTRACTS OF JAPAN vol. 005, no. 043 (M-060), 23.März 1981 & JP 55 166541 A (HITACHI CABLE LTD), 25.Dezember 1980,
- PATENT ABSTRACTS OF JAPAN vol. 010, no. 167 (M-488), 13.Juni 1986 & JP 61 017733 A (YOKOHAMA GOMU KK), 25.Januar 1986,
- PATENT ABSTRACTS OF JAPAN vol. 010, no. 021 (M-449), 28.Januar 1986 & JP 60 179538 A (BRIDGESTONE KK), 13.September 1985,
- PATENT ABSTRACTS OF JAPAN vol. 013, no. 281 (M-842), 27.Juni 1989 & JP 01 074333 A (SUMITOMO ELECTRIC IND LTD), 20.März 1989,

## Beschreibung

Die Erfindung betrifft einen schlauchförmigen Körper aus elastomerem Werkstoff und/oder Kunststoff, insbesondere für einen Luftfederbalg eines Luftfedersystems, bestehend aus einer Außenschicht, einer Innenschicht sowie einem eingebetteten Fesfigkeitsträger in Form von axial verlaufenden Fadenverstärkungen (DE-A-36 43 073).

In der Druckschrift US-A-3 897 941 wird ein schlauchförmiger Körper für eine Luftfeder beschrieben, der mit einem Festigkeitsträger verstärkt ist, wobei im Rahmen mehrerer Verstärkungsschichten die Corde von Schicht zu Schicht gekreuzt zueinander angeordnet sind.

Ausgehend von dem oben umrissenen Stand der Technik besteht die Aufgabe darin, bei einem gattungsgemäßen schlauchförmigen Körper ein Aufreißen in Längsrichtung zu verhindern.

Gelöst wird diese Aufgabe nun dadurch, daß
- der schlauchförmige Körper mit einem eingebetteten Schlitzschutz ausgerüstet ist, wobei als Schlitzschutz eine Querarmierung Verwendung findet, die in gekreuzter Form vorliegt, und zwar in Verbindung mit einer gewendelten oder geflochtenen Form; wobei ferner
- der Schlitzschutz bei folgendem Schichtenaufbau, und zwar von außen nach innen betrachtet, haftfreundlich präpariert ist:
   - Außenschicht;
   - Klebeschicht;
   - Festigkeitsträger;
   - Klebeschicht;
   - Schlitzschutz;
   - Klebeschicht;
   - Innenschicht.

Dabei ist es von Vorteil, wenn der Schlitzschutz ein Fadenmaterial ist, insbesondere in Form eines dünnen Fadens mit hoher Dehnung, insbesondere wiederum auf der Basis von Polyamid. Zweckmäßigerweise ist dabei das Fadenmaterial ein Einfachgarn mit geringer oder keiner Drehung. Ebenso zweckmäßig ist es, wenn das Fadenmaterial einen Titer < dtex 470 aufweist.

Die Querarmierung, insbesondere in Form von Fäden, ist vorteilhafterweise in einem weiten Abstand zueinander angeordnet, wobei der Abstand insbesondere 5 bis 15 mm beträgt und dabei jeweils gleich ist.

Bei einem Luftfederbalg eines Luftfedersystems ist der Schlitzschutz zweckmäßigerweise entweder außerhalb des Rollzonenbereiches oder über die gesamte Länge einschließlich des Rollzonenbereiches vorhanden.

Die Erfindung wird nun anhand eines Ausführungsbeispiels unter Bezugnahme auf schematische Zeichnungen erläutert. Es zeigen:
- Fig. 1: ein Luftfedersystem (ausgefedert);
- Fig. 2: ein Luftfedersystem (eingefedert);
- Fig. 3: die Lage eines gekreuzten Schlitzschutzes bei einem Luftfederbalg;
- Fig. 4: den Wandquerschnitt eines Luftfederbalges.

In Verbindung mit diesen Figuren gilt folgende Bezugsziffernliste:
- 1: Luftfederbalg
- 2: oberes Klemmteil
- 3: unteres Klemmteil (Abrollkolben)
- 4: Außenstützrohr
- 5: Rollzonenbereich
- 6: gekreuzter Schlitzschutz
- 7: Außenschicht
- 8: Klebeschicht
- 8': Klebeschicht
- 8": Klebeschicht
- 9: Festigkeitsträger
- 10: Innenschicht

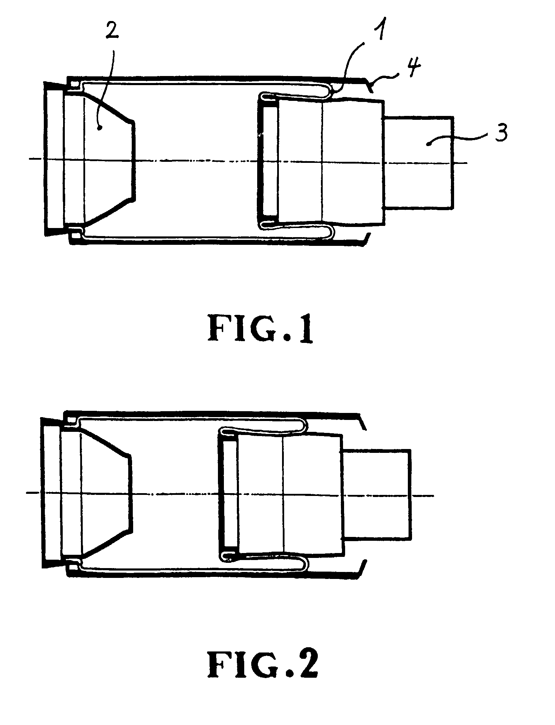

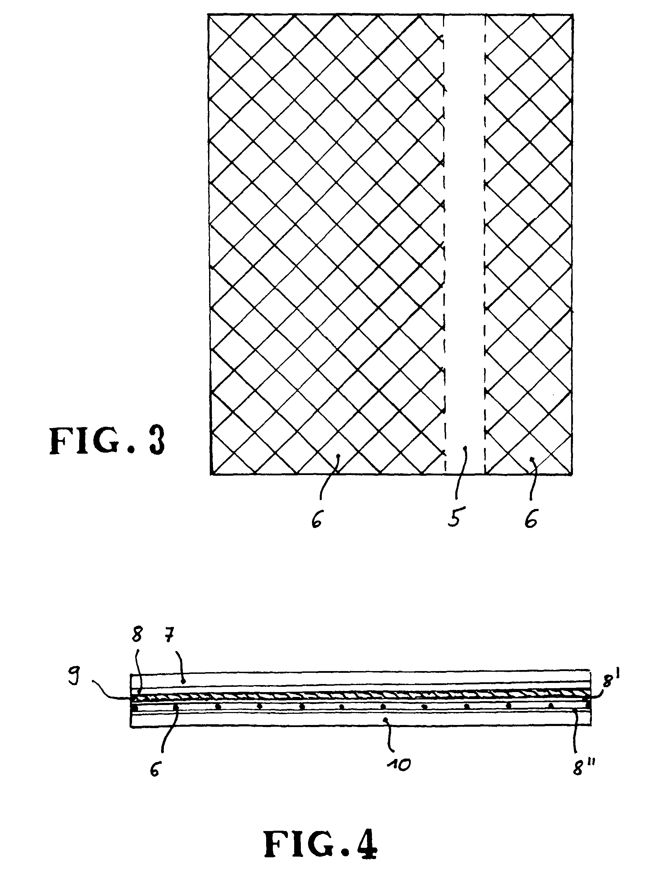

Nach Fig. 1 und 2 besteht das Luftfedersystem aus einem Luftfederbalg **1**, einem oberen Klemmteil **2**, einem unteren Klemmteil **3**, an dessen Außenwand der Luftfederbalg abrollen kann (Rollzonenbereich **5** des Luftfederbalges; Fig. 3), sowie aus einem Außenstützrohr **4**.

Dabei zeigt Fig. 1 den ausgefederten und Fig. 2 den eingefederten Zustand eines Luftfedersystems.

Fig. 3 zeigt nun die Lage eines gekreuzten Schlitzschutzes **6** bei einem Luftfederbalg, wobei der Schlitzschutz außerhalb des Rollzonenbereiches **5** vorhanden ist.

Nach Fig. 4 hat der Luftfederbalg folgenden Schichtenaufbau, und zwar von außen nach innen betrachtet:
- Außenschicht **7**;
- Klebeschicht **8**;
- Festigkeitsträger **9**;
- Klebeschicht **8'**;
- Schlitzschutz **6**;
- Klebeschicht **8"**;
- Innenschicht **10**.

## Patentansprüche

1. Schlauchförmiger Körper aus elastomerem Werkstoff und/oder Kunststoff, insbesondere für eine Luftfeder (1) eines Luftfedersystems, bestehend aus
- einer Außenschicht (7);
- einer Innenschicht (10) sowie
- einem eingebetteten Festigkeitsträger (9) in Form von axial verlaufenden Fadenverstärkungen;
dadurch gekennzeichnet, daß
- der schlauchförmige Körper mit einem eingebetteten Schlitzschutz (6) ausgerüstet ist, wobei als Schlitzschutz eine Querarmierung Verwendung findet, die in gekreuzter Form vorliegt, und zwar in Verbindung mit einer gewendelten oder geflochtenen Form; wobei ferner
- der Schlitzschutz bei folgendem Schichtenaufbau, und zwar von außen nach innen betrachtet, haftfreundlich präpariert ist:
- Außenschicht (7);
- Klebeschicht (8);
- Festigkeitsträger (9);
- Klebeschicht (8');
- Schlitzschutz (6);
- Klebeschicht (8");
- Innenschicht (10).

2. Schlauchförmiger Körper nach Anspruch 1, dadurch gekennzeichnet, daß der Schlitzschutz ein Fadenmaterial ist, insbesondere in Form eines dünnen Fadens mit hoher Dehnung, insbesondere wiederum auf der Basis von Polyamid.

3. Schlauchförmiger Körper nach Anspruch 2, dadurch gekennzeichnet, daß als Fadenmaterial ein Einfachgarn mit geringer oder keiner Drehung Verwendung findet.

4. Schlauchförmiger Körper nach Anspruch 2 oder 3, dadurch gekennzeichnet, daß das Fadenmaterial einen Titer < dtex 470 aufweist.

5. Schlauchförmiger Körper nach einem der Ansprüche 1 bis 4, insbesondere in Verbindung mit einem der Ansprüche 2 bis 4, dadurch gekennzeichnet, daß die Querarmierung, insbesondere in Form von Fäden, in einem weiten Abstand zueinander angeordnet ist.

6. Schlauchförmiger Körper nach Anspruch 5, dadurch gekennzeichnet, daß der Abstand 5 bis 15 mm beträgt.

7. Schlauchförmiger Körper nach Anspruch 5 oder 6, dadurch gekennzeichnet, daß der Abstand jeweils gleich ist.

8. Schlauchförmiger Körper nach einem der Ansprüche 1 bis 7, dadurch gekennzeichnet, daß der Schlitzschutz bei einem Luftfederbalg (1) eines Luftfedersystems außerhalb des Rollzonenbereiches (5) vorhanden ist.

9. Schlauchförmiger Körper nach einem der Ansprüche 1 bis 7, dadurch gekennzeichnet, daß der Schlitzschutz bei einem Luftfederbalg (1) eines Luftfedersystems über die gesamte Länge einschließlich des Rollzonenbereiches (5) vorhanden ist.

## Claims

1. Tubular body made of elastomer material and/or plastic, in particular for an air spring (1) of an air spring system, consisting of
- an outer layer (7),
- an inner layer (10) and
- an embedded strength carrier (9) in the form of thread reinforcements running axially,
characterised in that
- the tubular body is equipped with an embedded split protection (6), which split protection takes the form of a transverse reinforcement which is present in crossed form, in particular in combination with a coiled or plaited form, and further
- the split protection is prepared to facilitate adhesion with the following layer structure, considered from the outside to the inside:
- outer layer (7),
- adhesive layer (8),
- strength carrier (9),
- adhesive layer (8'),
- split protection (6),
- adhesive layer (8"),
- inner layer (10).

2. Tubular body according to claim 1, characterised in that the split protection is a thread material, in particular in the form of a thin thread with high elongation, in particular again on the basis of polyamide.

3. Tubular body according to claim 2, characterised in that a single yarn with little or no twisting is used as thread material.

4. Tubular body according to claim 2 or 3, characterised in that the thread material has a titre < dtex 470.

5. Tubular body according to one of claims 1 to 4, in particular in combination with one of claims 2 to 4, characterised in that the transverse reinforcement, in particular in the form of threads, is arranged with a wide mutual spacing.

6. Tubular body according to claim 5, characterised in that the spacing is 5 to 15 mm.

7. Tubular body according to claim 5 or 6, characterised in that the spacing is always the same.

8. Tubular body according to one of claims 1 to 7, characterised in that in an air spring bellows (1) of an air spring system the split protection is present outside the rolling zone area (5).

9. Tubular body according to one of claims 1 to 7, characterised in that in an air spring bellows (1) of an air spring system the split protection is present over the entire length including the rolling zone area (5).

## Revendications

1. Corps en forme de tuyau, en matériau élastomère et/ou en matière plastique, en particulier pour un ressort pneumatique (1) d'un système de suspension pneumatique, constitué de :
- une couche extérieure (7);
- une couche intérieure (10), et
- un support de résistance (9), intégré, ayant la forme de renforcements en fil s'étendant axialement;
caractérisé en ce que
- le corps en forme de tuyau est équipé d'une protection à fente (6) intégrée, une armature transversale étant utilisée comme protection à fente, se présentant sous une forme croisée et précisément en liaison avec une forme ondulée, ou tressée ou nattée; où en outre
- la protection à fente, ayant la structure en couche suivante et, précisément, en observant de l'extérieur vers l'intérieur, est préparée de manière à favoriser l'adhésion :
- couche extérieure (7);
- couche adhésive (8);
- support de résistance (9);
- couche adhésive (8');
- protection à fente (6);
- couche adhésive (8");
- couche intérieure (10).

2. Corps en forme de tuyau selon la revendication 1, caractérisé en ce que la protection à fente est un matériau filamentaire, en particulier sous la forme d'un fil mince à haute capacité d'extension, en particulier réalisé de nouveau à base de polyamide.

3. Corps en forme de tuyau selon la revendication 2, caractérisé en ce qu'on utilise comme matériau filamentaire un fil simple ayant une faible torsion ou aucune torsion.

4. Corps en forme de tuyau selon la revendication 2 ou 3, caractérisé en ce que le matériau filamentaire a un titre < dtex 470.

5. Corps en forme de tuyau selon l'une des revendications 1 à 4, en particulier en liaison avec l'une des revendications 2 à 4, caractérisé en ce que l'armature transversale, en particulier réalisée sous la forme de fils, est disposée avec un large espacement mutuel.

6. Corps en forme de tuyau selon la revendication 5, caractérisé en ce que l'espacement est de 5 à 15 mm.

7. Corps en forme de tuyau selon la revendication 5 ou 6, caractérisé en ce que l'espacement est chaque fois identique.

8. Corps en forme de tuyau selon l'une des revendications 1 à 7, caractérisé en ce que la protection à fente pour un soufflet de ressort pneumatique (1) d'un système de suspension pneumatique est prévue à l'extérieur de la région des zones de roulement (5).

9. Corps en forme de tuyau selon l'une des revendications 1 à 7, caractérisé en ce que la protection à fente pour un soufflet à ressort pneumatique (1) d'un système de suspension pneumatique est prévu sur toute la longueur, y compris la région à zone de roulement (5).
